# EUROPEAN PATENT SPECIFICATION

(11) **EP 2 139 232 B1**
(45) Date of publication and mention of the grant of the patent: **19.03.2014**
(21) Application number: 09163340.4
(22) Date of filing: 22.06.2009
(51) Int. Cl.: H04N 5/45

(54) **Use of pip-like structures of televisions for displaying commercial or information-containing broadcasts**
Verwendung PIP-artiger Strukturen aus Fernsehern zur Anzeige von werbungs- oder informationshaltigen Rundfunksendungen
Utilisation de structures de type incrustation de téléviseurs pour afficher des diffusions contenant des publicités ou des informations

(30) Priority: 23.06.2008 TR 200804561
(43) Date of publication of application: 30.12.2009
(73) Proprietor: Vestel Elektronik Sanayi ve Ticaret A.S., 45030 Manisa (TR)
(72) Inventor: Yalçin, Yanki, Maslak, 34469, ISTANBUL (TR)
(74) Representative: Cayli, Hülya

(56) References cited:
- EP-A2- 1 067 792
- WO-A1-00/38428
- WO-A2-01/58158
- WO-A2-2004/036384
- DE-A1- 19 640 338
- GB-A- 2 365 649
- US-A1- 2002 129 362
- US-A1- 2007 115 391

## Description

### Field of Invention

The present invention relates to a distinct application of the PIP (Picture In Picture) feature used in televisions, and more particularly to a method, which allows displaying commercials or information-containing broadcasts on a secondary display without interrupting the regular broadcast flow.

### Prior Art

Many broadcast stations offer a lot of TV programs to viewers free of charge nowadays. The offering of such programs to viewers is economically enabled thanks to paid commercials which the broadcast stations place during their broadcasts. Such commercials are charged based on the rating of timeframes during which they are placed, as well as on the duration and the frequency thereof. Such commercials are broadcasted at predetermined periods, interrupting the TV program during which they are broadcasted and consequently annoying the viewers of such programs.

Due to the annoyance caused by the commercials as they interrupt the flow of TV programs, various measures and regulations have been made to limit the duration and frequency thereof so that the allowable duration of commercials during broadcasts have been significantly restricted. This fact has put the broadcast channels and the others providing commercials and information-containing broadcasts into trouble. In other words, while the broadcast channels aimed to increase the duration of commercials during TV programs, the legal limitations have rendered this effort impossible.

The prior art embraces a lot of methods directed to reducing the annoyance caused by interruptive commercials on the viewers. Some of them are developed for such kind of commercials which are displayed over a currently-viewed regular broadcast and require to change the volume level and display characteristics in order to produce a marked difference between the region on which a commercial is shown and the region on which a program is broadcasted. Such methods, however, do have various drawbacks. Thus, since the commercials can also be displayed on a region on which a program is broadcasted, this approach cannot exactly fix the place of a commercial and may deteriorate the display quality of such program. It also avoids the viewing of the commercials which the viewers may want to view.

The published patent application US2007/0115391A1 discloses a method for eliminating the annoyance caused by commercials interrupting the flow of broadcasts by making use of the PIP feature of televisions. This method detects the starting time and the ending time of commercials to be displayed during a broadcast flow by making use of the PIP feature and activates the PIP display when the commercials start. When the commercials start, the program broadcasted on the screen is displayed on the PIP display, whereas the main screen is enabled to display a TV guide, a different predetermined broadcast channel, or a video of another video source, such as a DVD player. This method also closes the PIP display when the commercials are finished, and places the broadcasted channel back to the main display. It, however, does not give the chance to view on the main screen the commercials which are desired by the viewers, whereas the case, that the PIP display plays the actively broadcasted commercial while a commercial is broadcasted, may annoy the viewers.

In published patent application DE19640338A1. a method for reproduction of advertisements in separate window region on television screen during regular programme broadcasting is disclosed. In this method, advertisement and regular programme are displayed in two different regions on the screen. When the advertisement begins, the size of advertisement region enlarges on the screen to a predetermined size and then enlarged size gets smaller with approximation to the end of advertisement. The purpose of this method is to prevent channel switching with the beginning of advertisements and ensure that advertisements are watched by audience. So the said method does not allow the audience not to watch advertisements since the audience will miss a part of regular programme. In addition, the audience can not change the size of advertisement window, close the window when advertisement begins, or prevent opening of window before the beginning of advertisements.

In published patent application GB2365649A. a communication system in which transmitted advertisements may be stored in a user's access equipment for viewing on demand or replacing the advertisements transmitted later. User can choose to watch the advertisements with contents more relevant to personal interests. Furthermore, the disclosed system has no secondary screen for displaying the advertisements, so advertisements are displayed on the main screen either in the intervals synchronized with the advertisement breaks in the broadcast programming or at any other point chosen by the viewer. Consequently, the said system does not solve the problem of interrupting the broadcasting programme.

In published patent application US 2002/129362 A1, a technique for displaying plurality of commercials on the end user equipment while tuned to a television channel during the commercial slot as a substitute for a commercial broadcast on television is disclosed. The displayed commercials are selected among plurality of commercials by the user and prestored on a storage medium of the user equipment In this technique user can exclude the commercials which are not desired to be watched and history database is updated for excluded commercials. The history database does not provide statistics about watched/unwatched advertisements.

In published patent application EP 1067792 A2, a method for displaying advertising in a cable television network is disclosed. A plurality of commercials are stored within a storage area, program content is recognized, a trigger to display is received to select certain kinds of advertising items or to select specific advertisements for display to the viewer. The selected advertisements are displayed on viewer's unit.

In document WO 2004/036384 A2, a system for conditionally presenting selected categories of advertising to viewers is disclosed. Advertisements are classified as standard advertisements and upgraded advertisements and standard advertisements may be replaced with upgraded advertisements if the content of the advertisements are selected by the viewer.

In published patent application WO 01/58158 A2, methods and systems for forced advertising are provided. Disclosed systems and methods determine what a forced advertisement is and when it is to be presented. Forced advertisements that will be presented are detected using programming tags or data, using close captioning data or using any other suitable method. Forced advertisements may be presented at a certain time or certain times of the day or at certain times within a broadcast.

In published patent application WO 00/38428 A1, an on-demand electronic advertising information used in scenes of television programs is disclosed. The advertising information is received along with the broadcasts of associated television programs. When advertising information is available, the advertisements may be displayed, stored or may not be displayed. The advertising information is displayed by superimposing the information over the broadcast of the television program on the screen.

### Object of Invention

The object of the present invention is to provide the broadcasting of commercials, which interrupt the broadcasts or are displayed on a predetermined region over a program that is being watched, on a PIP-like secondary display without annoying the viewers.

Another object of the present invention is to receive the commercials from a second broadcast source, in place of transmitting the commercials in a form embedded into the broadcast, so that they can be displayed on a secondary display without interrupting a program that is being watched.

A further object of the present invention is to give the opportunity to close the PIP display/the secondary display, when a viewer does not want to watch the broadcasted commercials so that they can be watch afterwards.

Still another object of the present invention is to provide the capability of receiving, storing, and transmitting to the commercial broadcaster the information, if or not a respective broadcasted commercial has been watched.

### Description of Figure

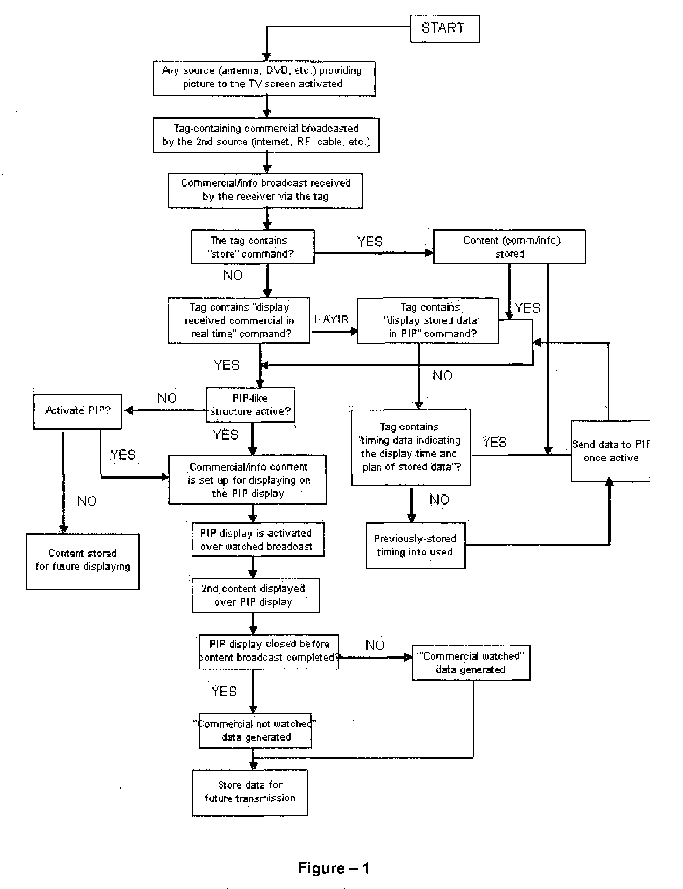

Figure 1 is a flow chart Illustrating an implementation of the method according to the present invention.

### Description of Invention

The television systems and broadcasting methods according to the prior art broadcast the commercials by interrupting a TV program that is being watched or by placing them over such TV programs. The viewers do not have the chance to skip or ignore the commercials without changing the channel or turning off the TV. As for the commercial providers, they cannot determine if or not their commercials are viewed.

The commercials are transmitted by the broadcast channels together with the broadcast (embedded thereto) or in succession, and are displayed on the TV screen in an overlapped form. Such commercials must be broadcasted by the broadcast channels, and commercial broadcasts cannot be implemented from another source.

The present invention gives the opportunity of displaying the commercials (or information-containing broadcasts) on a secondary display on the main screen without interrupting the broadcast, so that the viewers can both follow the program they watch and the commercials at the same time. The secondary display can be closed by the viewer and be watched afterwards. Thus, the viewers are enabled to watch the commercials whenever they wish to do so, without interrupting the TV program they currently watch. The method according to the present invention gives also the opportunity of broadcasting the commercials legally at desired frequencies. It is further made possible to determine the information if or not a broadcasted commercial is watched, to store this information, and to transmit it to the broadcaster of the commercial in the form of statistical data. Thanks to this system, it is not required to transmit a commercial together with a watched broadcast channel, it can be broadcasted anytime wished by means of any secondary connection independent from the channel, it can be placed in the form of subtitles over images currently watched, and the commercials can be broadcasted while the user watches a different source (e.g. DVD player, video player) via the television system.

A preferred television system on which the present invention is implemented is in connection with a second information/broadcast source. Commercials (or information-containing broadcasts) are broadcasted over this second source, and the information broadcasted is detected by the TV receiver. The second broadcast can be implemented by means of network connection, internet connection, RF, broadcast, cable connection, USB serial connection, etc. A television system by means of which the method according to the present invention is used also possesses the PIP or OSD (or a similar secondary display) feature, so that the images currently watched and received from a first broadcast source is displayed on the main screen, the commercials or information-containing broadcasts received from a second source are displayed on a secondary display like PIP, OSD, etc. Said secondary display is preferably made to appear on the screen in pop-up form when the commercial or information-containing broadcast is detected or when the broadcast command is detected by the system, it can be closed by the viewer, or it can be opened back when it is desired so that the commercial or the information-containing broadcast is resumed. Said system further comprises a memory area onto which commercial or information containing broadcast is stored.

An embodiment of the method according to the present invention is described in the flow chart illustrated in Figure 1. Accordingly,
- said method starts operating actively while a broadcast or a video from any first broadcast source is displayed on the televisions screen,
- commercial or information-containing broadcast which contains a tag is broadcasted from a second source (network connection, internet connection, cable connection, RF, broadcast).
- commercial or information-containing broadcast delivered together with a tag is detected by the receiver by means of said tag. Said tag defines the operation which must be made in relation to the broadcast to be transmitted after itself. The tag may contain the commands "display the broadcast that follows me in real time/immediately", "store the broadcast that follows me for future displaying". Said tag may further contain information about at which position and color the commercial or information is to be broadcasted on the screen, such that said commercial can be adapted according to this information and broadcasted on a secondary display. The tag, for instance, may contain commands to display the broadcast in the form of a subtitle or a black-colored script, to display it at the right lower corner of the screen in the PIP display, etc. The tag may also transmit a display schedule for the broadcasts stored on the system, in place of giving a command for the broadcast that follows itself. (e.g. display the stored commercials in succession starting at 22:30, or display the commercials in the following order).
- The command in said tag is detected by the receiver.
   - If the tag contains a "store" command, the respective broadcast is stored on a memory area in the television system for future broadcasting.
   - If the tag contains a "display" command, the operations are started which are required to adapt the respective broadcast for displaying it on the PIP screen (or on a similar secondary display) and to display it accordingly.
   - If the tag contains a "display the data stored on the system" command, the stored broadcast information is taken from the memory area in the system and the operations are started which are required to adapt it for displaying on the secondary display or on the PIP screen and to display it accordingly.
   - If the tag contains "timing information containing the displaying time and plan of the commercials or information-containing broadcasts stored on the system", the broadcast information stored on the memory area is received and is activated according to said timing information and order and displayed on a secondary display on the main screen.
   - If the tag contains a "display according to the order" command, the stored broadcast is displayed on the PIP screen in line with the info contained in the tag, according to previously-received and stored timing information.
- The procedure on displaying the commercial or information-containing broadcast on a secondary display contains the following steps:
   - The system checks if the secondary display (the PIP-like structure) is open (the viewer may not want to have the secondary display appearing for a certain time or anytime, and may select the option in the television setup to close the PIP display)
   - If the PIP-like structure is closed, the question "do you want to have the secondary display activated" is asked to the user.
   - If the user selects the yes command, the commercial or information-containing broadcast is set up so as to be displayed on the secondary display.
   - If the user selects the no command, said information is stored for future displaying, unless it is stored previously, or is ignored until the next tag info is received.
   - If the PIP-like structure is not closed, it is switched directly to the step by which the commercial or information-containing broadcast is set up for displaying on the secondary display without said operations being made.
   - The secondary display is opened over the currently-watched image, the second content (commercial/information broadcast) is displayed on the secondary display.
- It is determined if the commercial or the information containing broadcast is watched until completion by the viewer and this data is stored, this operation contains the following steps:
   - it is determined if the viewer closed the secondary display before the broadcast is completed.
   - If the secondary display is closed before the broadcast has completed, "commercial not watched" data is generated.
   - If the secondary display is not closed until the broadcast is completed, "commercial is watched" data is generated.
   - Such data generated are then stored for future transmission to the information provider.

In another embodiment of the method according to the present invention, the commercial or information-containing broadcast is stored on the system according to a certain timing procedure and displayed accordingly. The system, for instance, can directly store or display a received second broadcast during a predetermined timeframe period automatically, without requiring any tag information.

In a further embodiment of the method according to the present invention, the color and display features of the secondary display (e.g. the position, color of the PIP screen to pop-up) by which the commercial or information-containing broadcast is to be displayed is not transmitted by means of the tag, but determined by the system. The television system can determine the dominant color, the channel logo, etc. of the broadcast currently watched and may fix the color and position which are to minimally hinder the broadcast watched and display the PIP screen accordingly. (e.g. the dominant color of an currently-watched broadcast can be determined and the color of the PIP screen may be assigned accordingly.)

## Claims

1. A method for transmitting commercials or information-containing broadcasts by means of a second broadcast source instead of the broadcast channels, and for displaying said commercials or information-containing broadcasts without interrupting the current broadcast on a secondary display positioned over a currently watched image that is broadcasted from a first broadcast source on the television screen, comprising the following steps by which:
- the commercial or information-containing broadcast is broadcasted with a tag attached thereto by said second broadcast source
- the commercial or information-containing broadcast is detected by the receiver of the television system via said tag
- the broadcast is adapted for displaying on the secondary display or is stored on the system for future displaying according to a command included in said tag
- the system checks whether the secondary display is open or closed
- if the secondary display is open the commercial or information-containing broadcast is displayed on said secondary display,
- it is determined if the secondary display is closed before the broadcast is finished
- such data determined are stored on a memory area.
**characterized in that** said tag contains data about the position and colour by which the secondary display is to be displayed and the operation of setting up the broadcast on the secondary display according to the command included in the tag further comprises the operation of setting up the secondary display according to the position and colour information of the secondary display included in the tag.

2. A method according to Claim 1, **characterized in that** said secondary display is a PIP screen.

3. A method according to Claim 1, **characterized in that** said tag carries at least one of the commands of "store", "display", "display the data stored on the system", "display according to the order" commands, or information on "timing containing the displaying time and plan of the data stored on the system".

4. A method according to Claim 3, **characterized in that** if said tag contains a "store" command, the respective broadcast is stored on a memory in the television system for future displaying.

5. A method according to Claim 3, **characterized in that** if said tag contains a "display" command, the operations are started which are required to set up the respective broadcast for displaying it on the secondary display and to display it accordingly.

6. A method according to Claim 3, **characterized in that** if said tag contains a "display the data stored on the system" command, the stored broadcast information is taken from the memory area in the system and the operations are started which are required to set up it for displaying on the secondary display and to display it accordingly.

7. A method according to Claim 3, **characterized in that** if said tag contains "timing information containing the displaying time and plan of the data stored on the system", the broadcast information stored on the memory area is received and is activated according to said timing information and order and displayed on a secondary display positioned on the main screen.

8. A method according to Claim 3, **characterized in that** if said tag contains a "display according to the order" command, the stored data is displayed on the secondary display in line with the information contained in the tag, according to previously-received and stored timing information.

9. A method according to Claim 1, **characterized in that** the displaying of said commercial or information-containing broadcast on the secondary display comprises the following steps by which
- The system checks if the secondary display is open
- if the secondary display is closed, the question "do you want to have the secondary display activated" is asked to the user
• If the user selects the yes command, the commercial or information-containing broadcast is set up so as to be displayed on the secondary display
• If the user selects the no command, said information is stored for future displaying, unless it is stored previously, or is ignored until the next tag info is received
- if the secondary display is not closed, it is switched directly to the step by which the commercial or information-containing broadcast is set up for displaying on the PIP screen without said operations being made
- the secondary display is opened over a currently-watched image, the commercial or information-containing broadcast is displayed on the secondary display.

10. A method according to Claim 1, **characterized in that** the operation of determining the information about if said secondary display is closed before the broadcast is completed comprises the following steps, by which
- it is determined if the viewer closed the secondary display before the broadcast is completed
- if the secondary display is closed before the broadcast has completed, "commercial not watched" data is generated
- if the secondary display is not closed until the broadcast is completed, "commercial is watched" data is generated
- such data generated are then stored for future transmission to the information provider.

## Patentansprüche

1. Verfahren zum Übertragen von Werbesendungen oder Information enthaltenden Sendungen über eine zweite Sendequelle, anstelle der Sendefrequenzen (Kanäle), und zur Anzeige der Werbung oder Information beinhaltenden Sendungen, ohne eine Unterbrechung der laufenden Sendung, auf einem zweiten oder sekundären Display (Anzeige), die/der über einem aktuell betrachteten Bild liegt, welches von einer ersten Sendequelle aus auf den Fernsehschirm übertragen wird, mit den folgenden Schritten
- die Werbesendung oder die Information beinhaltende Sendung wird mit einem 'Tag' (Kennzeichen) versehen ausgestrahlt, dies von der zweiten Sendequelle
- die Werbesendung oder Information beinhaltende Sendung wird von dem Empfänger des TV-Systems über das Tag erkannt oder erfasst
- die Sendung oder das übertragene Signal wird angepasst für eine Anzeige auf dem zweiten Display oder auf dem System für eine spätere Anzeige gespeichert, entsprechend einem Befehl, der in dem Tag enthalten ist
- das System prüft, ob das zweite Display oder das zweite Fenster geöffnet oder geschlossen ist
- wenn das zweite Display geöffnet ist, wird die Werbesendung oder die Information beinhaltende Sendung in der zweiten Anzeige (Display) angezeigt
- es wird bestimmt, ob die zweite Anzeige geschlossen ist, bevor die Sendung beendet ist oder endete
- solche Daten werden bestimmt und in einem Speicherbereich gespeichert
**dadurch gekennzeichnet, dass** das Tag Daten über die Position und Farbe enthält, über die die zweite Anzeige anzuzeigen ist, und die Arbeitsweise des Aufbaus (Setup) oder der Einstellung der Sendung in der zweiten Anzeige entsprechend dem in dem Tag enthaltenen Befehl weist Folgendes auf: die Arbeitsweise des Aufbaus der zweiten Anzeige entsprechend der Information über die Position und Farbe der zweiten Anzeige, die in dem Tag enthalten ist.

2. Verfahren nach Anspruch 1, **dadurch gekennzeichnet, dass** das zweite Display (die zweite Anzeige) ein PIP-Schirm oder solcher Schirmabschnitt ist (Bild-im-Bild).

3. Verfahren nach Anspruch 1, **dadurch gekennzeichnet, dass** der Tag zumindest einen der folgenden Befehle mit sich trägt: 'Speichern', 'Anzeigen', 'Anzeigen der Daten, die in dem System gespeichert sind', 'Anzeigen entsprechend der Reihenfolge (Befehl)', oder eine solche Information enthält, die 'das Timing mit der Anzeigezeit und dem Plan von den im System gespeicherten Daten'.

4. Verfahren nach Anspruch 3, **dadurch gekennzeichnet, dass** bei Aufweisen eines Speicher-Befehls im Tag das jeweilige Sendesignal in einem Speicher des TV-Systems für eine künftige Anzeige gespeichert wird.

5. Verfahren nach Anspruch 3, **dadurch gekennzeichnet, dass** bei Vorliegen eines Anzeige-Befehls in dem Tag die Operationen gestartet werden, welche erforderlich sind, die jeweilige Sendung zur Anzeige in dem zweiten Display (in der zweiten Anzeige) vorzusehen (Setup) und sie dort entsprechend darzustellen (anzuzeigen).

6. Verfahren nach Anspruch 3, **dadurch gekennzeichnet, dass** bei Vorliegen eines 'Anzeigen der gespeicherten Daten im System'-Befehls in dem Tag die gespeicherte Sendeinformation von dem Speicherbereich in dem System genommen wird und die Operationen gestartet werden, welche erforderlich sind, die Sendeinformation für die Anzeige in der zweiten Anzeige vorzubereiten und sie entsprechend anzuzeigen.

7. Verfahren nach Anspruch 3, **dadurch gekennzeichnet, dass** bei Vorliegen von 'Timing-Informationen mit Anzeigezeit und einem Plan für die gespeicherten Daten im System' in dem Tag die in dem Speicherbereich gespeicherte Sendeinformation empfangen wird und entsprechend der Timing-Information und einer Reihenfolge (Befehl) aktiviert wird und eine Anzeige auf der zweiten Anzeige, die auf dem Hauptschirm positioniert ist, erfolgt.

8. Verfahren nach Anspruch 3, **dadurch gekennzeichnet, dass** bei Vorliegen des Befehls 'Anzeige entsprechend der Reihenfolge/Befehl' in dem Tag die gespeicherten Daten auf dem zweiten Display (der zweiten Anzeige) zusammen mit der in dem Tag enthaltenen Information angezeigt werden, entsprechend früher empfangener und gespeicherter Timing-Information.

9. Verfahren nach Anspruch 1, **dadurch gekennzeichnet, dass** die Darstellung oder die Anzeige der Werbung oder der Information beinhaltenden Sendung auf oder in der zweiten Anzeige (Display) die folgenden Schritte umfasst
- das System prüft, ob die zweite Anzeige geöffnet ist
- wenn die zweite Anzeige geschlossen ist, wird der Benutzer (User) gefragt, ob er das zweite Display aktivieren möchte
- wenn der User den Ja-Befehl wählt, wird die Werbung oder die Information beinhaltende Sendung so aufgebaut oder ausgerichtet (Setup), dass sie in der zweiten Anzeige darstellbar ist
- wenn der User den Nein-Befehl wählt, wird die Information für eine künftige Anzeige gespeichert, sofern sie nicht früher gespeichert worden ist, oder sie wird ignoriert, bis die nächste Tag-Information erhalten wird
- wenn das zweite Display nicht geschlossen ist, wird es direkt zu dem Schritt geschaltet oder geführt, von dem die, die Werbung oder Information beinhaltende Sendung vorbereitet oder ausgerichtet wird (Setup), um auf dem PIP-Schirm dargestellt zu werden, ohne diese Operationen auszuführen
- das zweite Display wird über einem aktuell betrachteten Bild geöffnet, die Werbung oder Information beinhaltende Sendung wird auf dem oder in dem zweiten Display (der zweiten Anzeige) dargestellt.

10. Verfahren nach Anspruch 1, **dadurch gekennzeichnet, dass** die Operation der Festlegung oder Bestimmung der Information darüber, ob die zweite Anzeige (das zweite Display) vor dem Ende der Sendung geschlossen ist oder geschlossen wird, die folgenden Schritte beinhaltend
- es wird bestimmt, ob der Benutzer die zweite Anzeige geschlossen hat, bevor die Sendung geendet hat oder vervollständigt wurde
- wenn das zweite Display (die zweite Anzeige) geschlossen wird, bevor die Sendung zu Ende oder vervollständigt war, werden Daten oder ein Signal generiert 'Werbung nicht betrachtet'
- wenn das zweite Display nicht geschlossen wird, bis die Sendung zu Ende ist oder geendet hat, wird ein Signal oder Daten erzeugt 'Werbung gesehen'
- die so erzeugten Daten oder das Signal werden für eine künftige Übertragung zu dem Informations-Bereitsteller (information provider) gespeichert.

## Revendications

1. Procédé pour transmettre des publicités ou des diffusions contenant des informations au moyen d'une deuxième source de diffusion au lieu des canaux de diffusion, et pour afficher lesdites publicités ou diffusions contenant des informations sans interrompre l'émission actuelle sur un affichage secondaire positionné sur une image actuellement visionnée qui est diffusée à partir d'une première source de diffusion sur l'écran de télévision, comprenant les étapes suivantes avec lesquelles :
- la publicité ou diffusion contenant des informations est diffusée avec une étiquette liée à celle-ci par ladite deuxième source de diffusion
- la publicité ou diffusion contenant des informations est détectée par le récepteur du système de télévision par le biais de ladite étiquette
- la diffusion est adaptée pour la visualisation sur l'affichage secondaire ou est stockée dans le système pour une visualisation future en fonction d'une commande contenue dans ladite étiquette
- le système vérifie si l'affichage secondaire est ouvert ou fermé
- si l'affichage secondaire est ouvert, la publicité ou diffusion contenant des informations est visualisée sur ledit affichage secondaire,
- il est déterminé si l'affichage secondaire est fermé avant que la diffusion soit terminée
- ces données déterminées sont stockées dans une zone de mémoire,
**caractérisé en ce que** ladite étiquette contient des données relatives à la position et à la couleur avec lesquelles l'affichage secondaire doit être visualisé et l'opération de mise en place de la diffusion sur l'affichage secondaire en fonction de la commande comprise dans l'étiquette comprend en outre l'opération de configuration de l'affichage secondaire en fonction des informations de position et de couleur de l'affichage secondaire comprises dans l'étiquette.

2. Procédé selon la revendication 1, **caractérisé en ce que** ledit affichage secondaire est un écran PIP.

3. Procédé selon la revendication 1, **caractérisé en ce que** ladite étiquette comporte au moins une des commandes parmi les commandes « stocker », « afficher », « afficher les données stockées dans le système », « afficher en fonction de l'ordre » ou des informations relatives à « planification comprenant le temps de visualisation et le plan des données stockées dans le système ».

4. Procédé selon la revendication 3, **caractérisé en ce que**, si ladite étiquette contient une commande « stocker », la diffusion respective est stockée dans une mémoire dans le système de télévision pour une visualisation future.

5. Procédé selon la revendication 3, **caractérisé en ce que**, si ladite étiquette contient une commande « afficher », les opérations sont démarrées, qui sont nécessaires pour configurer la diffusion respective pour sa visualisation sur l'affichage secondaire et pour la visualiser en conséquence.

6. Procédé selon la revendication 3, **caractérisé en ce que**, si ladite étiquette contient une commande « afficher les données stockées dans le système », les informations de diffusion stockées sont prélevées à partir de la zone de mémoire dans le système et les opérations sont démarrées, qui sont nécessaires pour les configurer pour leur visualisation sur l'affichage secondaire et pour la visualiser en conséquence.

7. Procédé selon la revendication 3, **caractérisé en ce que**, si ladite étiquette contient des « informations de planification comprenant le temps de visualisation et le plan des données stockées dans le système », les informations de diffusion stockées dans la zone de mémoire sont reçues et sont activées en fonction desdites informations de planification et de l'ordre et visualisées sur un affichage secondaire positionné sur l'écran principal.

8. Procédé selon la revendication 3, **caractérisé en ce que**, si ladite étiquette contient une commande « afficher en fonction de l'ordre », les données stockées sont visualisées sur l'affichage secondaire en ligne avec les informations contenues dans l'étiquette, en fonction d'informations de planification précédemment reçues et stockées.

9. Procédé selon la revendication 1, **caractérisé en ce que** la visualisation de ladite publicité ou diffusion contenant des informations sur l'affichage secondaire comprend les étapes suivantes avec lesquelles
- le système vérifie si l'affichage secondaire est ouvert
- si l'affichage secondaire est fermé, la question « voulez-vous avoir l'affichage secondaire activé » est posée à l'utilisateur
- si l'utilisateur sélectionne la commande oui, la publicité ou diffusion contenant des informations est configurée de manière à être visualisée sur l'affichage secondaire
- si l'utilisateur ne sélectionne aucune commande, lesdites informations sont stockées pour une visualisation future, à moins qu'elles n'aient été stockées précédemment, ou sont ignorées jusqu'à ce que les informations d'étiquette suivantes soient reçues
- si l'affichage secondaire n'est pas fermé, il est commuté directement à l'étape avec laquelle la publicité ou diffusion contenant des informations est configurée pour l'affichage sur l'écran PIP sans que lesdites opérations ne soient effectuées
- l'affichage secondaire est ouvert sur une image actuellement visionnée, la publicité ou diffusion contenant des informations est visualisée sur l'affichage secondaire.

10. Procédé selon la revendication 1, **caractérisé en ce que** l'opération de détermination des informations relatives au fait que ledit affichage secondaire est fermé avant que la diffusion ne soit terminée comprend les étapes suivantes avec lesquelles
- il est déterminé si le téléspectateur a fermé l'affichage secondaire avant que la diffusion ne soit terminée
- si l'affichage secondaire est fermé avant que la diffusion ne soit terminée, des données « publicité non visionnée » sont générées
- si l'affichage secondaire n'est pas fermé avant que la diffusion ne soit terminée, des données « publicité a été visionnée » sont générées
- ces données générées sont ensuite stockées pour une transmission future au fournisseur d'informations.
